(19) Europäisches Patentamt
European Patent Office
Office européen des brevets

(11) Publication number: 0 090 927
B1

(12) # EUROPEAN PATENT SPECIFICATION

(45) Date of publication of patent specification: 17.11.88

(51) Int. Cl.$^4$: C 08 G 73/10

(21) Application number: 83101242.2

(22) Date of filing: 09.02.83

(54) **Carbinol containing polyimides and use thereof for the preparation of cross-linked products.**

(30) Priority: 24.02.82 US 351801
26.07.82 US 401496

(43) Date of publication of application:
12.10.83 Bulletin 83/41

(45) Publication of the grant of the patent:
17.11.88 Bulletin 88/46

(84) Designated Contracting States:
DE FR GB

(56) References cited:
EP-A-0 077 718
FR-A-2 031 847
FR-A-2 157 697
US-A-3 939 109
US-A-3 998 786

**The file contains technical information submitted after the application was filed and not included in this specification**

(73) Proprietor: National Starch and Chemical Corporation
Box 6500
Bridgewater, N.J. 08807 (US)

(72) Inventor: Schoenberg, Jules E.
2079 Lyde Place
Scotch Plains New Jersey 07076 (US)

(74) Representative: Hagemann, Heinrich, Dr. et al
Patentanwälte GEYER, HAGEMANN & PARTNER Postfach 860329
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 090 927 B1

**Description**

This invention relates to a novel process for preparing a curable carbinol-containing polyimide, the curable carbinol-containing polyimide obtainable with this process and the use of this polyimide for preparing a resin by curing.

Polyimides are synthetic organic resins characterized by repeating imide linkages in the polymer chain which may or may not be terminated with polymerizable or inert (i.e. non-polymerizable) chemical groups. They are available in both linear and crosslinked forms and are noted for their outstanding chemical and physical properties, particularly their high temperature oxidative stability and strength. In addition to their use as adhesives and molded articles, they may be used as precured films and fibers, curable enamels, and laminating resins.

The polyimides, especially the preferred aromatic polyimides, are extremely difficult to process due to their insolubility and extremely high softening points. Attempts to improve their processability have included the introduction of aliphatic segments into the otherwise aromatic polymers and the introduction of flexibilizing moieties such as alkylene, ether, or thio bridges into the polymer chain.

The most common method of ensuring processability is to apply the polymer in the form of a polyamic acid intermediate. However, during curing to the fully or partially imidized resin, an appreciable amount of a volatile by-product (e.g. water, alcohol, or mixtures thereof depending upon the starting tetracarboxylic acid compound) is formed. This leads to the formation of voids when the resin is used as an adhesive between non-porous substrates or for forming molded articles.

In order to overcome these disadvantages, low molecular weight polyimides end-capped with polymerizable groups such as unsaturated groups have been prepared. These end-capped polyimides can be subsequently cured to void-free, higher molecular weight resins since no volatile by-product is formed. Polyimides end-capped with 3,6-endomethylene-1,2,3,6-tetrahydrophthalimide and 3-ethynylphenyl groups are respectively disclosed in the US—A—3,528,950 and US—A—3,879,349. However, the polyimides terminated with these groups require high cure temperatures, i.e. within the range of about 200—350°C, to effect further polymerization.

The present invention provides a process for preparing a curable carbinol-containing polyimide which comprises the steps of:

a) reacting (I) a diaryl carbinol tetracarboxylic acid compound selected from the groups of

a)) dianhydrides having the formula

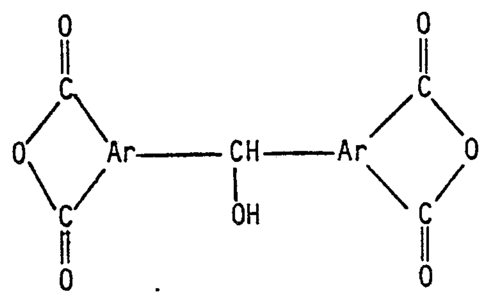

and

b)) diester-diacids having the formula

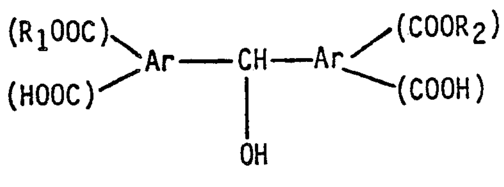

or isomers thereof, wherein Ar is an aromatic radical with the attached carbonyl groups situated on adjacent carbon atoms in the radical and $R_1$ and $R_2$ are the same or different lower alkyl groups and, optionally, (II) a non-carbinol-containing tetracarboxylic acid compound, provided that the carbinol-containing compound is present in the resulting polyimide in an amount sufficient to crosslink the polyimide, with (III) an aliphatic, cycloaliphatic, heterocyclic or aromatic primary diamine, using a molar ratio of (I) + (II) : (III) of between 2:1 and 1.2:1, the reaction being carried out in an inert organic solvent, which at least dissolves one of the reactants, at a temperature sufficient to effect imidization without substantial reaction of the carbinol groups,

b) removing the water and/or alcohol by-products; and

c) optionally removing the solvent under conditions which substantially prevent reaction of the carbinol groups.

Further the present invention provides a curable carbinol-containing polyimide obtainable according to the process of the invention, the use of this polyimide for preparing a resin by curing said polyimide at

150 to 250°C for about one hour, this use preferably comprising the steps of:

a) applying to one or more surfaces said polyimide and

b) bonding that surfaces together at said temperatures and at a sufficient pressure to form the bonds.

The above polyimides may be heat-cured to provide crosslinked products, i.e. crosslinked via a ring opening reaction. Heat curing may be carried out at a low temperature, i.e. 100—250°C for 0.5 to 2 hours, preferably at 150°C for 1 hour.

Suitable diaryl carbinol tetracarboxylic acid compounds are

a) the dianhydridges having the formula

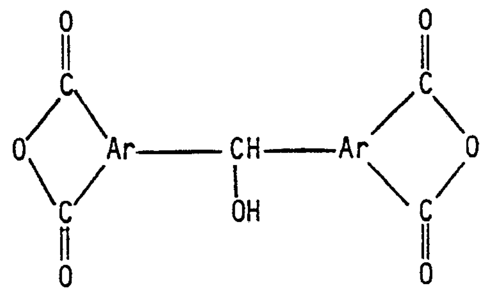 and

b) preferably diester-diacids having the formula

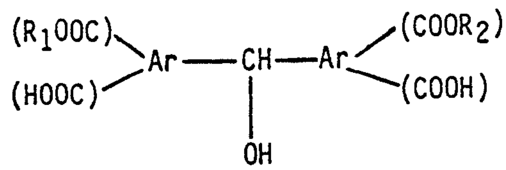

or the isomers thereof, wherein Ar is as defined hereinabove and $R_1$ and $R_2$ are the same or different lower alkyl groups, preferably $C_1$—$C_4$, most preferably $C_1$—$C_2$. A typical diester-diacid is the bis(methyl half ester) of 3,3',4,4'-benzhydroltetracarboxylic acid whose preparation is described in Example I.

It is possible to use a mixture of other conventional tetracarboxylic acid compounds (e.g. 3,3',4,4'-benzophenonetetracarboxylic acid dianhydride) and the carbinol-containing tetracarboxylic acid compound defined above, provided that the carbinol-containing compound is present in the resulting polyimide in an amount sufficient to crosslink the polyimide. Likewise it may be possible to selectively introduce the carbinol-containing tetracarboxylic compound into the chain or into the terminal positions by forming an amine terminated polyimide or polyamic intermediate and then reacting the amine terminated intermediate with the tetracarboxylic acid compound which is intended to be located in the terminal positions. Such variations are within the skill of the practitioner to effect.

The tetracarboxylic acid compounds to be used in the process of the invention are well-known in the art. A listing of suitable dianhydridges may be found in the US—A—3,669,074. The diester-diacids may be derived from these dianhydrides by reaction with a lower alcohol.

Suitable diamines including the aliphatic, cycloaliphatic, heterocyclic, and aromatic amines well-known in the art and listed in US—A—3,528,950 (cited previously). Aromatic diamines containing flexibilizing moieties, e.g. 4,4'-methylenedianiline, 4,4'-oxydianiline, 4,4'-sulfonyldianiline, and 4,4'-bis(3-aminobenzoyl)diphenyl ether, are preferred. However, m-phenylenediamine, an aromatic diamine which contains no flexibilizing moieties, is also useful herein. Aliphatic diamines suitable for use herein include bis(3-aminopropyl)tetramethyl disiloxane and 1,6-hexanediamine.

One or more of the diamines described hereinabove are reacted in a suitable inert organic solvent with the carbinol-containing tetracarboxylic acid compound (or its admixture with other tetracarboxylic acid compounds). Reaction conditions used for the preparation of the polyimides will depend, not only upon the diamine used, but more particularly on the tetracarboxylic acid compound used. They will also depend upon the solvent selected and the concentration and molecular weight of the polyamic intermediate desired in the final solution to be imidized. The reactions are carried out preferably under anhydrous conditions preferably using pure monomers and dry solvent.

The solvents used dissolve at least one of the reactants, preferably both. Suitable solvents include, for example, N,N-dimethylformamide, N,N-dimethylacetamide, dimethylsulfoxide, 1-methyl-2-pyrrolidinone and tetramethylurea. These solvents can be used alone or in combination with other solvents such as benzene, benzonitrile, dioxane, xylene, toluene, and cyclohexane.

The carbinol-containing tetracarboxylic acid compound (or the mixture of the carbinol-containing and other tetracarboxylic acid compound) are present in excess of the stoichiometric amount of diamine used, i.e. the mole ratio of tetracarboxylic acid compound(s) to diamine is 2:1 to 1.2:1. The molecular weight is controlled by the stoichiometry, as well as the reaction time and temperature.

The self-condensation of diaryl carbinol carboxylic acid dianhydrides is disclosed in the

US—A—3,293,267. It is stated therein that this self-esterification readily occurs when the dianhydride is dissolved in a solvent. The disclosure of US—A—3,293,267 is limited to homopolymers and gives no suggestion to introduce imide groups into the polymer molecule.

US—A—3,939,109 relates to polyamic acids prepared from substantially equimolar amounts of 3,3′,4,4′- benzhydrol tetracarboxylic dianhydride and a diamine. These polyamic acids are further condensed to produce a polyimide containing at least 10 recurring imide units, the final polyimide still containing the substantially unreacted carbinol groups of the dianhydridge. There is no suggestion to further crosslink the polyimide.

On removal of the solvent, such as in a typical adhesive application, the polyimide according to the invention crosslinks rapidly at elevated temperature and preferably without the formation of volatile by-products. Curing at temperatures of 100—125°C for about 1 hour effects partial crosslinking, as indicated by the partial insolubility of the resins in their former solvent (e.g. 1-methyl-2-pyrrolidinone). More complete crosslinking, as indicated by their further insolubility, is accomplished by curing for about 1 hour at 150°—250°C. Longer curing times at the lower temperatures and shorter curing times at the higher temperatures may effect crosslinking, and it is within the skill of one in the art to determine appropriate curing times and temperatures. It may be possible to effect the cure at lower temperatures using known catalysts for this ring opening reaction, such as tertiary amines. Higher molecular weight polyimides, depending upon the amine used in their preparation, may require higher curing temperatures to exceed the softening point of the polymer.

In the preferred method, a suitable diaryl ketone tetracarboxylic acid dianhydride is reacted with an anhydrous lower alcohol, preferably a lower alcohol such as methanol or ethanol, to form the corresponding diester-diacid, which is then hydrogenated at 20—30°C and 3542 kg/cm$^2$ (50600 psi) until the rate of hydrogen uptake decreases sharply. Higher temperatures and pressures may lead to hydrogenolysis of the hydroxyl group. The diamine and solvent (e.g. 1-methyl-2-pyrrolidinone) are then added and the excess alcohol distilled off, preferably under moderate vacuum. The imidization begins at approximately 100°C. The by-products (i.e. alcohol and water) are distilled off, either by using a moderate vacuum and a temperature below the boiling point of the solvent or by adding a water-insoluble solvent, such as toluene, and collecting the water-alcohol mixture in a Dean-Stark water trap. For the latter technique to work well a water-soluble, lower alcohol, preferably methanol, should be formed as the by-product.

When dianhydrides are used as the starting tetracarboxylic acid compound, it is preferable to maintain the tetracarboxylic acid compound in excess by adding the diamine, in portions, to a solution of the dianhydride in an anhydrous solvent. The initial reaction to produce the polyamic acid intermediate occurs at a relatively low temperature. Subsequent ring closing reactions to an anhydride terminated polyimide produce only water as a by-product.

When more than one tetracarboxylic acid compound is used to prepare the polyimides, they may be added together to form the random copolymer or they may be added and polymerized sequentially to form more ordered polymers such as block copolymers.

It is desirable to store the polyimides under dry conditions prior to use. Some hydrolysis of terminal anhydride groups will not, however, adversely effect the final crosslinking of the polyimides since the anhydride will reform during heat curing. Such hydrolysis will, however, result in the formation of a volatile by-product with its resultant disadvantages.

The polyimides obtained by the process of the invention may be used as adhesives or moldings. They are usually used as smooth viscous solutions which can be applied to suitably prepared substrate surfaces; if desired, they may be formulated with fillers, thickeners, pigments, etc. They may be used with or without supports such as glass fabric. Alternatively, they may be cast into a film from solution and then applied. If necessary, the substrates are allowed to stand to permit some or all of the solvent to evaporate. The treated surfaces to be bonded are assembled together by means of a clamp or press and the assembled substrates are heated to effect crosslinking of the polyimide.

The resins may be converted to the dry form by precipitating with a suitable solvent (i.e. one that will not react with the anhydride groups), such as acetone, and used to form filled or unfilled molded articles. They are especially useful therein since the subsequent curing to effect crosslinking via the ring opening reaction does not form a volatile by-product and the molded articles are void-free. Compression molding temperatures and pressures can be determined by the skilled practitioner.

The polyimides may also be blended with various epoxy resins and then co-cured by heating in the presence of the amine catalysts typically used in curing epoxy resins. In the uncured state, the epoxy resin acts as a secondary solvent for the polyimides. The cured adhesive shows increased strength and, when filled with silver powder or other conductive metal powders, shows increased electrical conductivity.

In the examples which follow, all parts and percentages are given by weight and all temperatures are in degrees Celsius. Inherent viscosities were determined on 1 g/dl solutions at 25°C in 1-methyl-2-pyrrolidinone.

## Example I

This example describes the preparation of a polyimide by the reaction of bis(methyl half-ester) of 3,3′,4,4′-benzhydroltetracarboxylic acid and 4,4′-methylenedianiline and its subsequent curing to the

crosslinked product. It also describes the preparation of the half-ester.

Preparation of Bis(methyl half-ester) of 3,3',4,4'-benzhydroltetracarboxylic Acid

A total of 241.7 g (0.75 mole) of 3,3',4,4'-benzophenonetetracarboxylic dianhydride was refluxed with stirring for 2 hours with 400 ml of methanol. The solution was cooled and charged to a 1 l auto-clave along with 100 ml methanol, 10 g of 5% palladium on activated carbon, and 5 drops of N,N-diethyl nicotinamide. Hydrogenation of the resulting bis(methyl half-ester) of 3,3',4,4'-benzhydroltetracarboxylic acid was carried out at 25—30°C and 7.03—10.55 kg/cm$^2$ (100—150 psi) until the rate of hydrogen uptake decreased sharply. The solution was gravity filtered, and the filter paper and its contents were washed with methanol. The yield was 584.6 g, which corresponded to 779.5 g of solution per mole. The $C^{13}$ NMR spectrum indicated that hydrogenation of the ketone to carbinol was 90% complete and that there was no hydrogenolysis of the alcohol (i.e. no $CH_2$ formation).

Preparation of an Anhydride Terminated Polyimide (Tetracarboxylic acid half ester/diamine mole ratio — 4/3)

A 500 ml round bottom, 4-neck flask was charged with 0.12 moles (93.5 g) of the above solution containing the half-ester, 0.09 moles (17.8 g) of 4.4'-methylenedianiline, and 85 ml of 1-methyl-2-pyrrolidinone. The methanol was removed by vacuum distillation up to a pot temperature of 110°C and a vacuum of 20 mm Hg. A total of 65 ml of toluene was added and the flask was fitted with a 30 ml Dean-Stark receiver. The solution was refluxed until the water-methanol mixtured ceased to evolve (about 3—4 hours). The toluene was then removed by vacuum distillation.

The resulting anhydride terminated polyimide had an inherent viscosity of 0.10. It was cast on a glass plate as a 0.005 cm (0.002 in) film and cured for 1 hour at 150°C. The resulting polymer was insoluble in 1-methyl-2-pyrrolidinone, indicating that it was crosslinked. The film was tough and adhered strongly to the glass.

Examples II—XII

Additional polyimides and the crosslinked products thereof were prepared using the procedure of Example I and the bis(methyl half-ester) of 3,3',4,4'-benzhydroltetracarboxylic acid described therein. The diamine used, the tetracarboxylic acid half-ester/diamine mole ratio, number (n) of recurring units, and the inherent viscosity of the resulting polyimide are given below.

| Experiment No. | Diamine | Mole Ratio | n | Inherent Viscosity |
|---|---|---|---|---|
| II | 4,4'-oxydianiline | 4/3 | 2 | 0.22 |
| III | 4,4'-sulfonyldianiline | 4/3 | 2 | 0.17 |
| IV | 4,4'-Bis(3-aminobenzoyl)diphenyl ether | 4/3 | 2 | 0.14 |
| V | bis (3-aminopropyl)tetramethyl disiloxane | 4/3 | 2 | 0.37 |
| VI | m-phenylenediamine | 4/3 | 2 | 0.21 |
| VII | 1,6-hexanediamine | 4/3 | 2 | 0.19 |
| VIII | 4,4'-methylenedianiline | 2/1 | 0 | 0.17 |
| IX | 4,4'-methylenedianiline | 5/4 | 3 | 0.18 |
| X | 4,4'-methylenedianiline | 6/5 | 4 | 0.29 |

The resulting polyimides were cast as films, as described above. The films II-X crosslinked after 1 hr at 150°C.

Example XI

The following example illustrates the use of the polymer of Example I as an adhesive.

Two steel bars have the dimensions 1.27 by 10.16 by 0.32 cm were used as the test materials to be bonded. Prior to application of the adhesive, the surfaces were scoured with Scotchbrite® (trade name for a scouring pad marketed by 3M Co.) and then cleaned with acetone. A small amount of the adhesive was spread along the cleaned surface of one bar near one edge. The second bar was pressed against the first bar to form an adhesive film such that there was 1.27 cm overlap for each bar and hence a bonding area of 1.61 cm$^2$. The bars were clamped together by means of a spring clip and cured for 1 hr at 150°C. The tensile shear strength was determined by pulling the bars apart with an Instron Testile Tester at a

crosshead operation speed of 0.254 cm/min. The average of 5 samples was 78 $kg/cm^2$.

Example XII

The following example illustrates the use of a mixture of carbinol and non-carbinol containing tetracarboxylic acid compounds. The imidization was carried out using the procedure of Example I except that 0.06 mole (19.3 g) of 3,3',4,4'-benzophenonetetracarboxylic acid dianhydride was refluxed for 2 hr with 40 ml of methanol, the solution was cooled, and 0.06 mole (46.8 g) of the bis(methyl half-ester) of 3,3',4,4'-benzhydroltetracarboxylic acid was added to give 0.12 mole of combined tetracarboxylic acid compounds. The diamine used, mole ratio of tetracarboxylic acid compounds to diamine, and inherent viscosity of the resulting polyimide is given below.

| Experiment No. | Diamine | Mole Ratio | Inherent Viscosity |
|---|---|---|---|
| XII | 4,4'-methylenedianiline | 4/3 | 0.21 |

The resulting polyimide was cast as a film, as described above; it crosslinked after 1 hour at 150°C.

**Claims**

1. A process for preparing a curable carbinol-containing polyimide which comprises the steps of:
a) reacting (I) a diaryl tetracarboxylic acid compound selected from the groups of
a)) dianhydrides having the formula

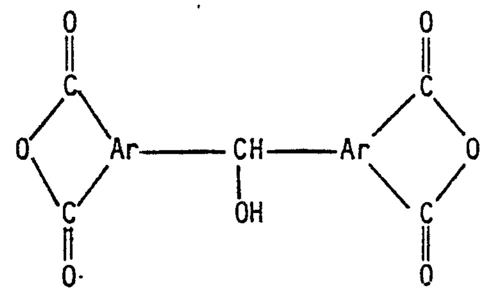 and

b)) diester-diacids having the formula

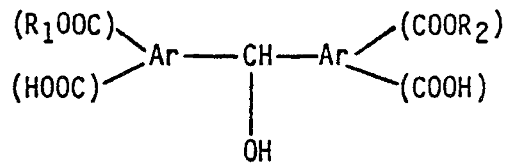

or isomers thereof, wherein Ar is an aromatic radical with the attached carbonyl groups situated on adjacent carbon atoms in the radical and $R_1$ and $R_2$ are the same or different lower alkyl group and, optionally (II) a non-carbinol-containing tetracarboxylic acid compound, provided that the carbinol-containing compound is present in the resulting polyimide in an amount sufficient to crosslink the polyimide, with (III) an aliphatic, cycloaliphatic, heterocyclic or aromatic primary diamine, using a molar ratio of (I) + (II) : (III) of between 2:1 and 1.2:1, the reaction being carried out in an inert organic solvent, which at least dissolves one of the reactants, at a temperature sufficient to effect imidization without substantial reaction of the carbinol groups,
b) removing the water and/or alcohol by-products; and
c) optionally removing the solvent under conditions which substantially prevent reaction of the carbinol groups.

2. A process to Claim 1, wherein (I) is the bis(methyl half-ester) of 3,3',4,4'-benzhydroltetracarboxylic acid.

3. A process of Claim 1 or 2, wherein the amine is selected from the group consisting of 4,4'-methylenedianiline, 4,4'-oxydianiline, 4,4'-sulfonyldianiline, 4,4'-bis(3-aminobenzoyl)diphenyl ether, m-phenylenediamine, bis(3-aminopropyl)tetramethyl disiloxane, and 1,6-hexanediamine.

4. A curable carbinol-containing polyimide obtainable according to the process of one of the preceding claims.

5. The use of the polyimide of Claim 4 for preparing a resin by curing said polyimide at 150 to 250°C for about one hour.

6. The use according to Claim 5, which comprises the steps of:
a) applying to one or more surfaces said polyimide and
b) bonding said surfaces together at said temperatures and at a sufficient pressure to form the bonds.

**Patentansprüche**

1. Verfahren zur Herstellung eines vernetzbaren, Carbinolgruppen enthaltenden Polyimids, das folgende Maßnahmen umfaßt:
a) Umsetzen (I) einer Diarylcarbinoltetracarbonsäureverbindung, ausgewählt unter den Gruppen von
a)) Dianhydriden der Formel

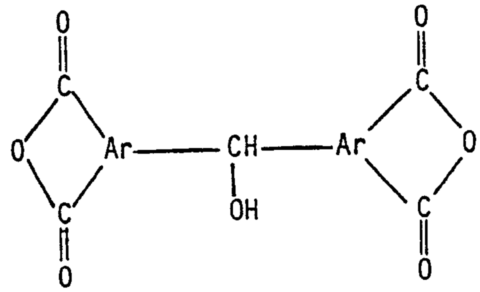 und

b)) Diester-disäuren der Formel

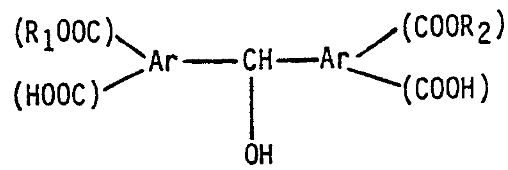

oder Isomeren davon, worin Ar ein aromatisches Radikal mit daran gebundenen Carbonylgruppen, die in dem Radikal an benachbarten Kohlenstoffatomen gelegen sind, ist und $R_1$ and $R_2$ gleiche oder unterschiedliche niedere Alkylgruppen sind, und gegebenenfalls (II) einer keine Carbinolgruppen enthaltenden Tetracarbonsäureverbindung, was unter der Voraussetzung gilt, daß die Carbinolgruppen erhaltende Verbindung in dem anfallenden Polyimid in einer zur Vernetzung des Polyimid ausreichenden Menge vorliegt, mit (III) einem aliphatischen, cycloaliphatischen, heterocyclischen oder aromatischen primären Diamin unter Wahl eines Molverhältnisses von (I) + (II) : (III) zwischen 2:1 und 1,2:1, wobei die Umsetzung in einem inerten organischen Lösungsmittel, das mindestens einen der Reaktionspartner löst, bei einer Temperatur durchgeführt wird, die ausreicht, um die Imidierung ohne wesentliche Umsetzung der Carbinolgruppen zu bewirken,
b) Entfernen des Wassers und/oder der alkoholischen Nebenprodukte und
c) gegebenenfalls Entfernen des Lösungsmittels unter Bedingungen, die im wesentlichen die Umsetzung der Carbinolgruppen verhindern.

2. Verfahren nach Anspruch 1, wonach (I) der Bis(methylhalbester) der 3,3',4,4'-Benzhydroltetracarbonsäure ist.

3. Verfahren nach Anspruch 1 oder 2, wonach das Amin unter der Gruppe ausgewählt worden ist, die aus 4,4'-Methylendianilin, 4,4'-Oxydianilin, 4,4'-Sulfonyldianilin, 4,4'-Bis(3-aminobenzoyl)diphenylether, m-Phenylendiamin, Bis(3-aminopropyl)tetramethyldisiloxan und 1,6-Hexandiamin besteht.

4. Vernetzbares, Carbinolgruppen enthaltendes Polyimid, erhältlich nach dem Verfahren nach einem der vorhergehenden Ansprüche.

5. Verwendung des Polyimids nach Anspruch 4 zur Herstellung eines Harzes durch Vernetzen des Polyimids bei 150 bis 250°C während etwa einer Stunde.

6. Verwendung nach Anspruch 5, die die Maßnahmen des
a) Auftragens des Polyimids auf eine oder mehrere Oberflächen und
b) das Verbinden der Oberflächen bei den genannten Temperaturen und bei einem ausreichenden Druck, um Verbindungen zu bilden, umfaßt.

**Revendications**

1. Procédé de préparation d'un polyimide contenant un carbinol, pouvant être traité par cuisson, qui comprend les étapes consistent:
a) à faire réagir (I) un composé d'acide diarylcarbinol-tétracarboxylique choisi dans le groupe
a)) des dianhydrides répondant à la formule

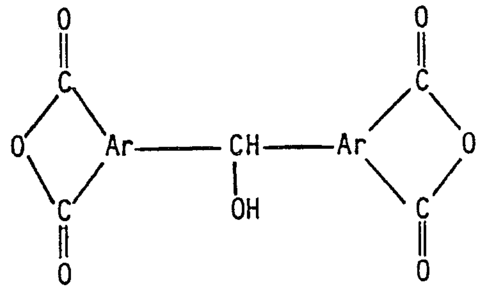 et

b)) des diester-diacides répondant à la formule

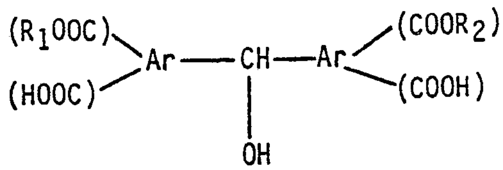

ou leurs isomères, formules dans lesquelles Ar est un radical aromatique dans lequel les groupes carbonyle sont situés sur des atomes adjacents de carbone et $R_1$ et $R_2$ sont des groupes alkyle inférieurs identiques ou différents et, à titre facultatif, (II) un composé d'acide tétracarboxylique no contenant pas de carbinol, sous réserve que le composé contenant un carbinol, sous présent dans le polyimide résultant en une quantité suffisante pour réticuler le polyimide, avec (III) une diamine primaire aliphatique, cycloaliphatique, hétérocyclique ou aromatique en utilisant un rapport molaire (I) + (II) : (III) compris entre 2:1 et 1,2:1, la réaction étant conduite dans un solvant organique inerte qui dissout au moins l'un des corps réactionnels, à une température suffisante pour effectuer une imidation sans réaction notable des groups carbinol,

b) à éliminer l'eau et/ou les alcools formés comme sous-produits; et

c) le cas échéant, à éliminer le solvant dans des conditions qui empêchent principalement la réaction des groupes carbinol.

2. Procédé suivant la revendication 1, dans lequel le composé (I) est le bis-(demi-ester méthylique) de l'acide 3,3',4,4'-benzhydroltétracarboxylique.

3. Procédé suivant la revendication 1 ou 2, dans lequel l'amine est choisie dans le groupe comprenant la 4,4'-méthylènedianiline, la 4,4'-oxydianiline, la 4,4'-sulfonyldianiline, d'éther de 4,4'-bis-(3-aminobenzoyl)diphényle, la m-phénylènediamine, le bis-(3-aminopropyl)tétraméthyldisiloxane et la 1,6-hexanediamine.

4. Polyimide contenant un carbinol apte au traitement par cuisson, pouvant être obtenu conformément au procédé de l'une des revendications précédentes.

5. Utilisation de polyimide suivant la revendication 4, pour la préparation d-une résine par traitement par cuisson dudit polyimide à une température de 150 à 250°C pendant environ une heure.

6. Utilisation suivant la revendication 5, qui comprend les étapes consistant:

a) à appliquer ledit polyimide sur une ou plusieurs surfaces et

b) à lier lesdites surfaces l'une à l'autre auxdites températures et à une pression suffisante pour former les liaisons.